# EUROPEAN PATENT SPECIFICATION

(11) **EP 3 166 038 B1**
(45) Date of publication and mention of the grant of the patent: **06.05.2020**
(21) Application number: 15192935.3
(22) Date of filing: 04.11.2015
(51) Int. Cl.: G06F 21/57, G06F 9/445, G06F 8/65

(54) **METHOD AND ARRANGEMENTS FOR UPDATING MEMORY SPACES IN DISTRIBUTED DEVICES OF A HOUSE AUTOMATION SYSTEM**
VERFAHREN UND ANORDNUNGEN ZUR AKTUALISIERUNG VON SPEICHERRÄUMEN IN VERTEILTEN VORRICHTUNGEN EINES HAUSAUTOMATISIERUNGSSYSTEMS
PROCÉDÉ ET AGENCEMENTS DE MISE À JOUR DES ESPACES DE MÉMOIRE DANS DES DISPOSITIFS DISTRIBUÉS D'UN SYSTÈME D'AUTOMATISATION DE MAISON

(43) Date of publication of application: 10.05.2017
(73) Proprietor: Helvar Oy Ab, 02150 Espoo (FI)
(72) Inventor: Ellwood, Simon, Dartford, Kent DA2 7SY (GB)
(74) Representative: Berggren Oy, Helsinki & Oulu

(56) References cited:
- EP-A1- 2 109 041
- EP-A2- 0 950 948
- EP-A2- 1 460 514
- US-A- 5 752 042
- US-A1- 2006 069 836
- US-A1- 2006 129 846
- US-A1- 2007 287 439
- US-A1- 2011 173 457
- Anonymous: "XML-binary Optimized Packaging - Wikipedia, the free encyclopedia", , 27 July 2015 (2015-07-27), XP055242194, Retrieved from the Internet: URL:https://en.wikipedia.org/w/index.php?t itle=XML-binary_Optimized_Packaging&oldid= 673286084 [retrieved on 2016-01-18]

## Description

### FIELD OF THE INVENTION

The invention concerns the field of updating the contents of memory located in the devices in the distributed domain of a house automation system. Particularly the invention concerns a method and arrangements that enable flexible administration of program versions and other memory contents in lighting control systems that may contain devices and subsystems from different manufacturers and/or different product generations.

### BACKGROUND

A lighting control system can be conceptually divided into a central domain and a distributed domain. The central domain comprises central controllers, routers and the like, i.e. devices that are relatively few in number and that are centrally located in a control cabinet or otherwise relatively easily accessible for authorized personnel. They offer centralized access to control the operation of the lighting control system. The distributed domain comprises light sources, drivers, sensors, repeaters, switch panels, and other devices that may be located all over the premises and that may be difficult to access physically. Practically all devices in a modern lighting control system may involve some degree of programmability, which means that they contain one or more processors or controllers that execute a program stored in a memory for playing their part in the system. A control bus, such as a DALI bus for example (Digital Addressable Lighting Interface), links the devices together and makes it possible to transfer commands, measurements, messages, and other kinds of digital data.

A profound trend in all kinds of electronic systems is integration with long distance data transfer networks, such as the internet. It is expected that while traditional lighting control systems were essentially standalone systems with the central domain representing the highest level of control, future lighting control systems will have versatile connectivity for example so that some or all of the tasks of a traditional central domain controller may actually be executed "in a cloud", i.e. by a shared pool of configurable computing resources that can be physically located even very far away from the lighting control system in question. As a difference to the concepts of distributed domain and central domain, which traditionally refer exclusively to devices and functionalities that are physically present within (or at least relatively close to) the premises the lighting of which is to be controlled, the devices and connections responsible for the cloud computing part may be characterized as belonging to a global domain.

A lighting control system may be in use for decades, and there may come a need to update the programs that the processors or controllers execute in the distributed domain. Updating may add features, fix bugs, improve performance, change protocols, add capability, and provide compatibility, among others. Difficulties may arise if and when the devices in the system come from different manufacturers and/or different product generations. The program code in the devices is typically manufacturer-specific and highly confidential. Even in the favourable situation in which all devices of the lighting control system are remotely updateable, an operator wishing to update the system should typically contact the manufacturer or representative of each device type separately to arrange for the distribution of software updates. And even then the operator remains dependent on the hopefully existing capability of the devices in the central domain to arrange for the distribution of the remote updates so that the devices in the distributed domain can receive them reliably and use them for the intended purpose.

Even if the whole system only contained components from one manufacturer, it is not self-evident that the operator knows, what software versions are currently in use in the various devices and to which extent the devices are compatible with the update that should be distributed. Also the inherent properties of the control bus may make software updates difficult. Control buses like DALI typically offer relatively limited data speeds, so the updating method should utilize the available resources as efficiently as possible.

What is said above of lighting control systems may be generalized to house automation systems that involve aspects like HVAC, environmental monitoring, security, access control, and others. It is to be expected that house automation evolves towards extensive adaptability, interoperation between systems, and widespread utilisation of loT (Internet of Things), so that the traditional borderlines between specialized systems become blurry or vanish altogether.

US2011173457 describes a method for performing firmware changes. EP2109041 describes a method for performing software updates.

### SUMMARY

It is an objective of the present invention to provide a method and devices for updating the contents of memories in the distributed-domain devices of a house automation system, with emphasis on interoperability between devices of different brands and/or product generations. Another objective of the invention is to allow easy updating and further developing of embedded software in a house automation system with a large number of devices in the distributed domain. A further objective of the invention is build version control into the system, so that updating is possible in a controlled manner even without the central domain maintaining any prior knowledge of the existing versions of software in use in the distributed domain.

The objectives of the invention are reached with a method and apparatus as defined by the respective independent claims.

According to an example embodiment, there is provided a method for updating a memory space in a device belonging to the distributed domain of a house automation system. The method comprises:
- forming a binary file of encrypted, intended updated contents of said memory space,
- using a publicly available protocol to packetize said binary file into one or more transmission packets,
- transferring said one or more transmission packets to said device through a control connection of said house automation system,
- reconstructing said binary file at said device, and
- writing the contents of said binary file into said memory space.

The exemplifying embodiments of the invention presented in this patent application are not to be interpreted to pose limitations to the applicability of the appended claims. The verb "to comprise" and its derivatives are used in this patent application as an open limitation that does not exclude the existence of other features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF DRAWINGS

- Fig. 1: illustrates a method for updating memory spaces in distributed devices of a house automation system,
- fig. 2: illustrates an example of implementing steps of the method of fig. 1 in various devices of the system,
- fig. 3: illustrates the role of confidential and public domains in the system,
- fig. 4: illustrates the exchanging of transmissions between a device or subsystem at a central domain and devices in the distributed domain,
- fig. 5: illustrates an example of updateable memory spaces,
- fig. 6: illustrates a method of obtaining and delivering possible updates,
- fig. 7: illustrates a method alternative to that of fig. 6,
- fig. 8: illustrate a method of making transmissions from a central domain device, and
- fig. 9: illustrates a method alternative to that of fig. 1.

### DETAILED DESCRIPTION OF EMBODIMENTS OF THE INVENTION

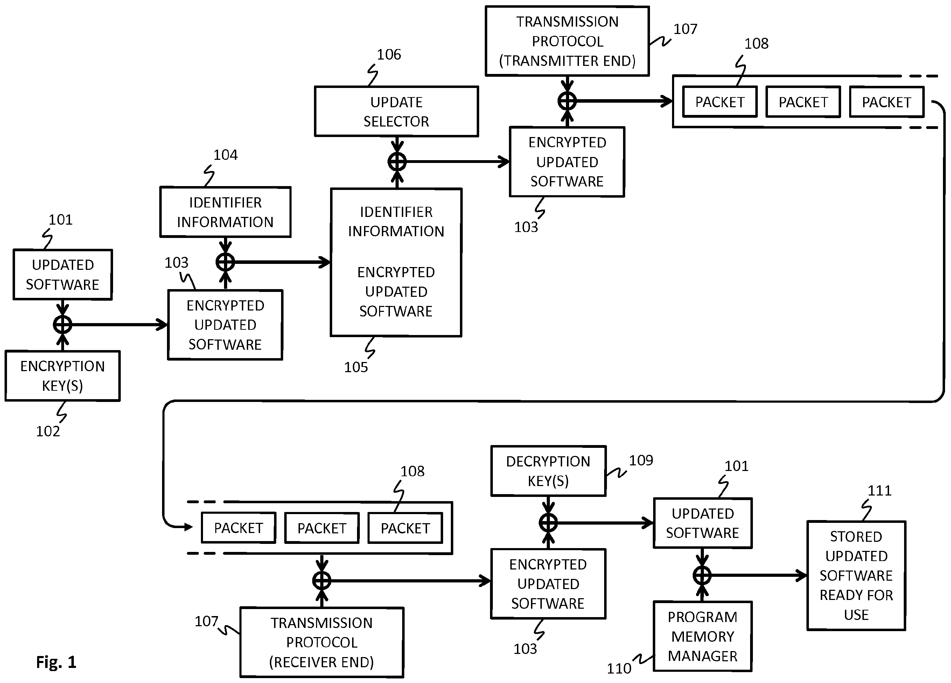

Fig. 1 illustrates a method for updating a memory space in a device belonging to the distributed domain of a house automation system. Such a device can be called a distributed domain device for short. In the continuation we may use terms particularly related to lighting control systems for the purpose of illustration and example, but as the various aspects of house automation tend to integrate and enter into complex relationships characterized by messages, data, and even commands flowing through and between system components of widely varying functionality, it should be remembered that the invention is not limited to just lighting control.

A piece of updated software 101 is encrypted, using one or more encryption keys 102. The updated software 101 constitutes the intended updated contents of a memory space in a device located in the distributed domain of a lighting control system. The designation "software" is used here in a wide sense, basically meaning any kind of information provided in digital form that can be transferred over a communications connection, in contrast to "hardware" that must be moved physically in tangible form. The updated software 101 may involve for example an application program, firmware, configuration data, communication protocol(s), part(s) of any of those mentioned, and/or other forms of digital data to be stored in the memory of the device located in the distributed domain.

The typical purpose of encrypting is to protect the intellectual property of the party responsible for the updated software 101, so that unauthorized parties would find it difficult or impossible to find out the exact contents of the updated software and/or to make unauthorized copies of (or changes to) the software. For example, if the manufacturer of LED drivers has come up with new, manufacturer-specific functions that the LED drivers should execute internally in order to achieve a particularly pleasing observable lighting effect, the manufacturer will most probably want to keep his competitors from finding out the exact nature of those functions. The result of the encrypting is a piece of encrypted updated software 103. It could be characterized as a binary file (or, in some cases, a collection of two or more binary files) of encrypted, intended updated contents of said memory space in the device located in the distributed domain.

The characterization of the encrypted updated software 103 as a binary file means that for an outside observer it is simply a collection of consecutive binary values, i.e. 0's and 1's, without necessarily having any apparent higher-level logical structure. It is common to handle binary information in bytes of eight bits, but for the purposes of the present invention a "binary" file does not need to have its meaningful information represented by an exact number of bytes. A consequence of handling the encrypted updated software 103 in binary form is that a transmission protocol does not need to know anything about its internal organization in order to transmit it correctly over a communications connection; it suffices to transmit all the 0's and 1's in correct order.

The same advantageous characteristic of binary files that makes them easy for later handling, i.e. their appearance as a mere collection of consecutive binary values with apparently no higher-level logical structure, may also be a disadvantage in the sense that human observers will find them non-intuitive, and it may be difficult for a human observer to tell one binary file from another. In the method illustrated in fig. 1, after forming the binary file, the binary file is inserted in one or more parts into a document 105 composed in a markup language. In particular, some identifier information 104, which may contain human-readable identifiers, comments, explanations and the like, is combined with the encrypted updated software 103 to form the document 105. The identifier information 104 may contain, for example, an identifier of the intended updated contents of the memory space to be updated. Additionally or alternatively it may contain one or more identifiers of devices or device types for which the update is suitable; one or more identifiers of the originator(s) of the update(s); time information related to creation, publication, and/or validity of the update(s); geographical or installation-specific identifier(s) indicative of where or in which existing installations those devices are located to which the update(s) is/are intended; information concerning a division of the binary file into some smaller sections or parts; and information related to the intellectual property contained in the update(s). A file name of the binary file may constitute a part of the identifier information 104.

One markup language document may contain one or more binary files, and/or a particular binary file may appear in one, two, or more markup language documents. For example, a manufacturer of devices for house automation systems may know or assume that previously delivered devices appear in various combinations in the house automation systems of different users, so software update compilations for such various combinations may be published in a corresponding number of markup language documents in parallel.

Manufacturers of commercial products frequently use so-called GTINs (Global Trade Item Numbers) as identifiers in their products. The GTIN standard has replaced the older EAN and UCC standards used previously for the same purpose. An inherent feature of a GTIN is a standardized way of representing a company prefix and an item reference number. The identifier information 104 may contain for example a GTIN code that, in addition to identifying a manufacturer or other party responsible for the contents of the binary file, acts as an identifier of the intended updated contents of the memory space to be updated. In other words, the GTIN code may be accurate enough to identify a type or kind of software, and not only a particular tangible product like a LED driver in which such software would be contained.

The next step illustrated in fig. 1 comprises using an update selector 106 to separate the binary file (i.e. the encrypted updated software 103, or a part of it) from other contents of said document. In some cases the data transmission capacity of the control connection of a house automation system may be limited, and/or the processing power available at a distributed domain device may be small, which both advocate the separating step because it ensures that only such information will be transmitted to the distributed domain device that is actually needed there. The actual transmission step comprises using a publicly available protocol 107 to packetize the binary file into one or more transmission packets 108, and transferring these to the device to be updated through a control connection of the lighting control system (or house automation system, to preserve generality).

The characterization of the protocol 107 as "publicly available" emphasizes the difference between parts of the method that involve confidential information and those parts that should be available to anybody. The updated software 101 may involve trade secrets, undisclosed innovations, copyrighted computer code, keys or other cryptographic information, and/or other intellectual property of its creator. The updated software 101 may be device- and/or system-specific, so that it is only meant for (and will perform correctly only in) devices of a particular manufacturer and/or in devices delivered to a particular customer. However, said devices may appear as a part of a large installation, with at least some other devices coming from a different manufacturer, and/or with the operation and maintenance of the installation being on the responsibility of a party that has no affiliation with the originator of the updated software 101. In an advantageous case the protocol 107 is publicly available in the sense that any party responsible for the operation and maintenance of a lighting control system (or, more generally, a house automation system) may program said system to use the protocol 107 for distributing software updates, independently of device manufacturers or creators of updated software. The protocol 107 may be even part of an international standard, such as the DALI, KNX, CAN, or other standard. Concerning digital rights management it is customary to define the term "publicly available" as the complement of "proprietary", meaning that no party has expressed an interest of restricting others from using e.g. the protocol that is "publicly available" by nature.

The control connection that is used to transfer the packets 108 is most preferably the same control connection that is also used to send operating commands to the devices in the system. For example, if the devices of a lighting control system are linked together with a DALI, KNX, or CAN bus, the packets 108 are most preferably transferred over the DALI, KNX, or CAN connection. However, the packets 108 may also be transferred through a control connection of some other kind. As an example, if a wired connection like DALI is used for sending operating commands and the like, the updated software can be sent through a wireless control connection based on e.g. Bluetooth or ZigBee.

At the receiving distributed domain device the receiver's part of the protocol 107 is used to reconstruct the binary file that constituted the encrypted updated software 103. Decryption key or keys 109 are used to decrypt the encrypted updated software 103, so that the original updated software 101 is got as the result. The decryption key or keys 109 may be permanently stored in the receiving device, for example as a part of a boot loader program that is burnt in a ROM (read-only memory) of the device, or at least one decryption key may have been received as a part of some earlier software update at the receiving device.

The step of reconstructing the binary file at the receiving device may comprise decrypting the binary file (i.e. decrypting the encrypted updated software) essentially immediately upon reception and writing the contents of the binary file in decrypted form into the memory space to be updated. Alternatively the step of writing the contents of the binary file into the memory space to be updated may comprise writing said contents into said memory space in encrypted form, and the method may comprise decrypting the encrypted contents of said memory space at a later instant of time, possibly separately each time when it is needed and only for the purposes of that instance of use. The former alternative (storing in decrypted form) involves the advantage that the decrypted updated software is later immediately available with minimal delay for any operation at the receiving device in which it may be needed, while he latter alternative (storing in encrypted form, and only decrypting later) involves the advantage of keeping unauthorized parties from compromising the confidentiality of updated software by examining a device that has received such updated software.

At its lower right part Fig. 1 shows how a program memory manager 110 is responsible for storing the updated software 101 in a program memory of the device, so that the final result is the updated software stored in a program memory in a way that makes it ready for use at the device, as illustrated with a reference designator 111.

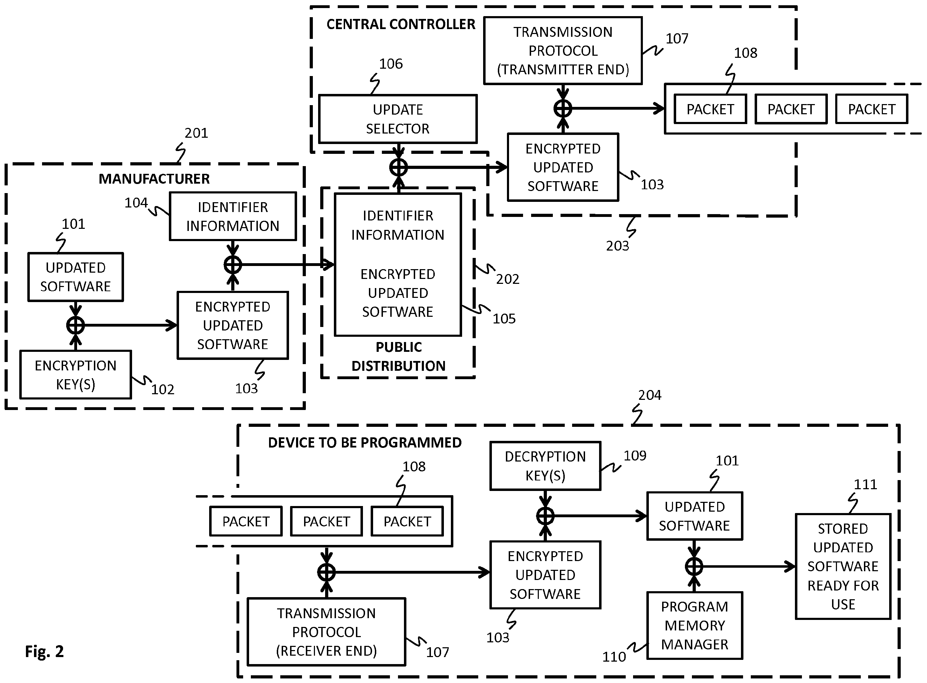

Fig. 2 illustrates an example of how the various steps of the method described above can be distributed among a number of processing devices or subsystems. Block 201 illustrates method steps that may be executed under the control of the creator of the updated software: the actual software is created and encrypted, and combined with appropriate identifier information to produce the entity that was referred to above as the document composed in a markup language. The markup language in question may be for example XML, so what comes out of the subsystem of the software creator is an XML document in which some parts are human-readable or at least relatively easy to recognize while other parts may consist of one or more apparently completely incomprehensible character strings that represent the binary file.

The XML document may be distributed through a public distribution channel 202, such as a website. One idea of public distribution is to make it easy and convenient for proprietors and operators of house automation systems to get hold of always the latest versions of software for the devices in their systems, regardless of which manufacturer originally produced the devices and/or which party was responsible for originally installing and commissioning the systems. Naturally the public distribution channel 202 may also involve other implementations, such as distribution in stored form on a portable memory medium, distribution through short range device-to-device communication links, long-range wired or wireless broadcasting from a broadcasting station, and the like. The public distribution channel 202 may also comprise a chain of different elements, so that the output from the software creator's system 201 is first stored on a portable memory medium, from which it is copied to a terminal, which transmits it to a server, from which it is downloaded to another terminal, which stores it on another portable memory medium, which is coupled to a central controller of a lighting control system.

Block 203 represents a central controller of a lighting control system (or more generally a house automation system), and it may mean a single device or a number of devices that are considered to belong to the central domain of the system. Concerning the method, a task to be implemented in block 203 is the use of a publicly available protocol to packetize the binary file into one or more transmission packets. Before that a selection operation may be performed, in order to extract from the XML document that binary file or those binary files that will be used for the updating. Block 204 represents a device or devices the software of which is to be updated.

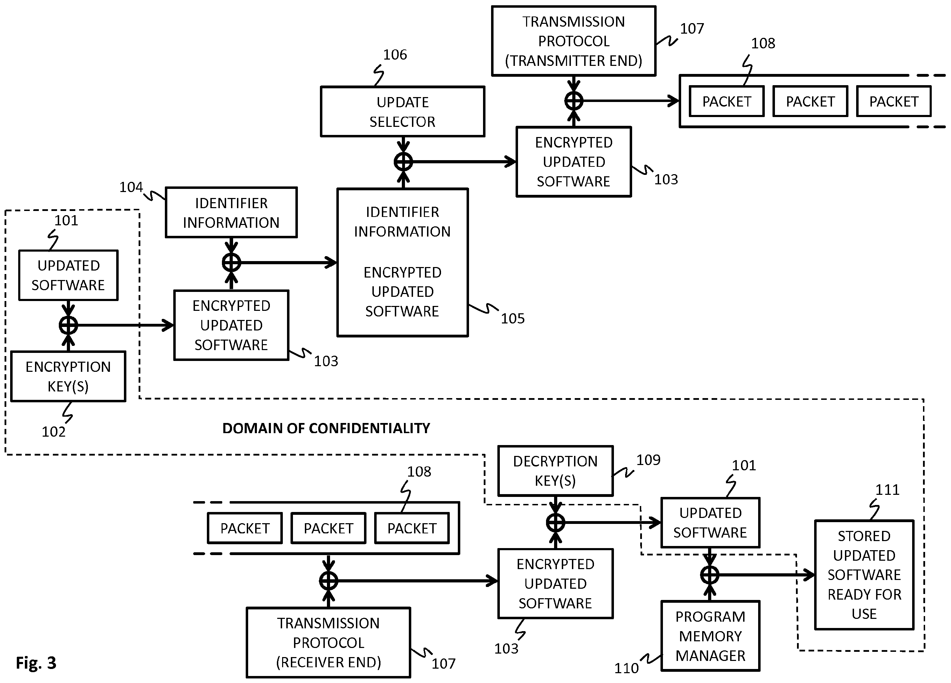

Fig. 3 illustrates the role of confidential information vs. public domain in the method described above. The updated software 101, the encryption keys 102, and the decryption keys 109 may be controlled by the creator or proprietor of the updated software. The encryption keys 102 are safe in a protected subsystem of the creator or proprietor of the updated software, and the decryption keys 109 are stored in the receiving device in a secure way, for example as a part of its boot loader program. The way in which identifier information 104 is combined with the encrypted updated software 103 to produce the document 105, the way in which the encrypted updated software 103 is extracted from the document 105 before transmission, and the way in which the transmission protocol 107 packetizes and transfers the document, can all be public information, and even standardized for obligatory use by everyone, without in any way sacrificing the confidentiality of the actual updated software.

The use of encryption and decryption can be used also for other purposes than just protecting the confidential information of device manufacturers and creators of software. The decryption operation at the receiving device may comprise an integrity check that ensures that the result of the decryption operation is a legal and appropriate software update. In other words, the device to be updated may check that the use of an appropriate decryption key, which as such is confidential and securely stored in the device itself, results in a piece of digital information in which all Cyclic Redundancy Checks or corresponding measures of correctness and authenticity give the appropriate result. This acts as a preventive measure that prevents the installation of e.g. software updates that came from authentic origins but were maliciously modified during delivery, or software updates that were not even composed by an authenticated party to begin with. Actual cryptographic methods for checking the integrity and authenticity of digital data are well known and need not be described here in more detail. In the graphical illustration of fig. 3 the checking of integrity and authenticity mean that domain of confidentiality is protected from unauthorized additions and modifications coming from outside.

An encryption operation may involve (or be augmented with) also data compression, in which case the necessary decompression may be performed either simultaneously with decrypting the encrypted information or before or after it.

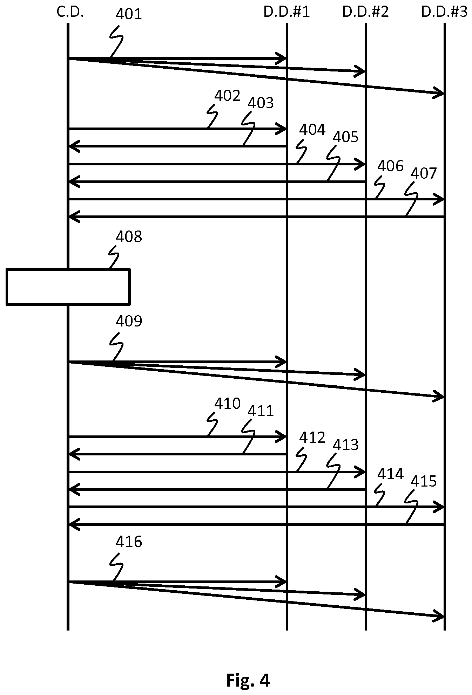

Fig. 4 illustrates the exchanging of messages between a central domain device or subsystem (C.D.) and three devices in the distributed domain (D.D.#1, D.D.#2, D.D.#3) of a house automation system. We assume that the devices are coupled together with a control connection that may be used both for broadcast messages, which are directed from the central domain to all (or a group of) devices in the distributed domain, and for point-to-point messages that only go between one device at each end. We also assume that a particular operating mode, such as one of the standard-defined Operating Modes of the DALI standard, has been defined for updating memory spaces in the devices in the distributed domain.

Step 401 represents commanding the devices in the distributed domain to enter a particular operating mode used for updating the contents of memory spaces. This is done by broadcasting a corresponding command from the device or subsystem in the central domain.

The next phase involves interrogating each of the three devices in the distributed domain of contents of a memory map maintained by the device. The purpose is to make the device or subsystem in the central domain aware of at least the compatibility of the device in question with possible software updates. The device or subsystem in the central domain may also find out, which software version(s) is/are already stored at device in question. The pair of messages illustrated as 402 and 403 represent interrogating the first device in the distributed domain, while the pairs of messages 404 and 405, and 406 and 407, correspond to interrogating the second and third devices in the distributed domain respectively. The concept of memory maps is used here in the same sense as in the DALI standard, but for the sake of generality it can be taken, throughout this text, to mean a set of data that contains identifiers of updateable software that the device in the distributed domain is compatible with. The expression "memory map" is not meant to bind the described solution to any particular standard; it merely refers to some kind of an identifier block or concise collection of digital data that reveals some key contents of the desired portions of non-volatile memory.

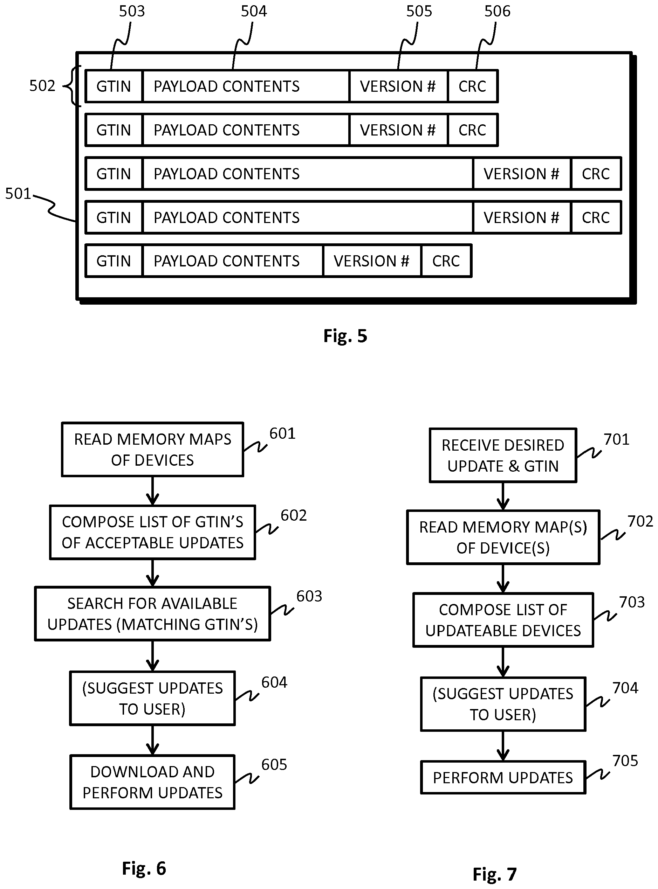

The use of memory maps for storing identifiers of updateable software may be used in various ways. Fig. 5 illustrates a piece of memory 501 in a device belonging to the distributed domain of a house automation system. The memory 501 is remotely updateable, so it may consist for example of flash memory or EEPROM, or some combination of these. Parts of the memory may be called memory spaces; there are five of these shown as horizontal rectangles in fig. 5, with the memory space 502 shown as an example. The concept of updated software that has been introduced earlier corresponds to the concept of memory space in fig. 5 so that one update, or a piece of software that comes in one binary file, is preferably used to update the contents of one memory space, for example the memory space 502 in fig. 5.

Exemplary portions of the memory space 502 are an identifier field 503, a field 504 for storing the actual software (called here a "payload contents" field), a version number field 505, and a CRC field 506. Different memory spaces in the memory 501 may be of different lengths, particularly so that they have payload contents fields of different length (although differences may exist also in the lengths of one or more of the other fields). Storing auxiliary information such as a version number and CRC together with the actual software, systematically in the last six bytes of the memory space for example, involves both advantages and disadvantages. An advantage is that the boot loader or other routine that is responsible for responding to an interrogating central domain device and/or checking the integrity of stored data can easily find the appropriate information. A disadvantage is that some bytes of the actual memory space must be reserved for this purpose, and are thus not available for storing actual updateable software. An alternative would be to store the memory-space-specific version numbers and/or CRC codes somewhere else in the distributed domain device, in some other memory that is accessible to the boot loader or corresponding routine.

The identifier field 503 is used to store an identifier, such as a GTIN, of a piece of software to be stored in that field. Such a GTIN is a "virtual" GTIN in the sense that it does not identify any tangible product, but a type or kind of software that could be stored in the corresponding updateable memory space. There may be for example one memory space (and correspondingly one GTIN) for the firmware of a communications protocol, another memory space (and the corresponding GTIN) for configuration data, yet another memory space (and the corresponding GTIN) for an application program, and the like. When a distributed domain device responds to interrogation of the contents of its memory map, it may announce the GTINs of all updateable memory spaces it has, and it may also announce version numbers of whatever contents are already stored in those memory spaces.

According to an advantageous embodiment, when a new device is shipped from its manufacturer, it already contains a number of identifiers (such as "virtual" GTINs) of updateable software essentially permanently stored therein, for example as a part of its boot loader program or otherwise stored in a non-volatile memory. The updateable software to which the stored identifiers refer does not even need to exist at that time; the manufacturer may reserve a range or selection of identifiers for possible software that might be produced in the future. Then when a software update is created and distributed (for example in encrypted form within an XML file) to the device or subsystem at the central domain of a house automation system, interrogating of the kind described above can be used to find out, which devices in the distributed domain are compatible with the software update. The method may thus comprise selecting, at the central domain of the house automation system, the intended updated contents of a memory space in a device in the distributed domain, based on the contents of the memory map the device sent in response to interrogating.

It may be desirable to reserve such a wide range or large selection of identifiers for possible updateable software that might be produced in the future for a particular device that storing all individual identifiers of that range or selection would consume excessive amounts of non-volatile memory in the device. In such cases it may be advantageous to store, in the non-volatile memory of the device, values from which the range or selection of identifiers can be unambiguously deduced. For example, if the identifiers constitute an ordered series like serial numbers, it may be sufficient to store the first and last identifiers of the range, or the first identifier and the number of consecutive identifiers thereafter that are reserved. A selection of regularly occurring identifiers can be indicated in a similar way by indicating a first identifier, the step between consecutive identifiers, and the number of reserved identifiers. As another example, if the identifiers are (or can be represented in the form of) binary numbers of fixed length, a range/selection of reserved identifiers can be unambiguously indicated by announcing only some most/least significant bits that are common to all reserved identifiers.

Referring back to fig. 4, the order of the command broadcasting step 401 and the interrogation phase involving steps 402 to 407 may be reversed, and the interrogation phase involving steps 402 to 407 may be even completely separated from the other steps of the method, for example so that if an interrogation phase has been performed at some earlier instant from which not more than a predetermined maximum time has passed, the device or subsystem at the central domain believes to have actual enough information of the devices and their memory maps.

Step 408 in fig. 4 represents selecting, at the central domain of the house automation system, the intended updated contents of a memory space in a device in the distributed domain, based on the contents of the memory map the device sent in response to interrogating. In fig. 4 it is assumed that the responses 403, 405, and 407 from the devices in the distributed domain indicated that each of them is compatible with the same updated software, so at step 408 the device or subsystem at the central domain selects the same binary file, i.e. the same intended updated contents of memory spaces in all three devices in the distributed domain. Step 409 corresponds to using the publicly available protocol to packetize said binary file into one or more transmission packets, and transferring, in one or more broadcast-type transmissions, said one or more transmission packets to all three devices in the distributed domain through a control connection of said house automation system. The possibility of broadcasting the software updates to two or more devices in the distributed domain simultaneously may save considerable time: the data transmission capability of control connections may be relatively slow and the number of devices may be in dozens or hundreds, so updating each of them individually could take much longer.

In order to ensure correct operation of the devices in the distributed domain after the software update, it is advantageous to check that they all received the updated software correctly and succeeded in storing it into non-volatile memory (possibly including decrypting, if the updated software is to be stored in decrypted form). In the method illustrated in fig. 4 step 410 represents querying the first device in the distributed domain of a result of updating the memory space that was to be updated. Step 411 represents sending, from the first device in the distributed domain, a response to such querying, said response indicating one of the possible results, for example: having completed the updating successfully, still having the updating in progress, or having failed the updating.

The response at step 411 may comprise e.g. a selected value of a response parameter, so that a first value (or a value belonging to a first range or first selection of values) indicates having completed the updating successfully, a second value (or a value belonging to a second range or second selection of values) indicates still having the updating in progress, and a third value (or a value belonging to a third range or third selection of values) indicates having failed the updating.

Reserving a range or selection of values for each purpose enables indicating simultaneously some more detailed information. For example, one of the values in the first range or selection may indicate success at first attempt and without delays, while another value in the first range or selection may indicate success after repeated attempts or a delay of a particular length. Similarly one of the values in the second range or selection may indicate a first reason for delay, while another value in the second range or selection may indicate a second reason for delay. The device or subsystem at the central domain may collect valuable information about how the storing of previous software updates has proceeded, and use such accumulated information for example to log and report anomalous behaviour and/or to adjust the time factors involved at subsequent instances of software updating.

An advantage of using a range or selection of values instead of just a single value for each purpose is related to (possibly manufacturer-specific) extensions of functionality. A cheaper general-purpose device or subsystem in the central domain (or a central controller coming from a different manufacturer than that responsible for the devices in the distributed domain) could only tell that e.g. updating one of the devices in the distributed domain failed, because the device in question responded with a value that belongs to the range indicating failure. A more advanced device or subsystem in the central domain (or a central controller from the same manufacturer as the devices in the distributed domain) could include the additional capability of recognizing the actual value and making more accurate deductions about how it should react to the situation, what should be reported to the user, and the like.

Steps 412 and 413 in fig. 4 represent the querying and responding steps associated with the second device in the distributed domain, and steps 414 and 415 represent the querying and responding steps associated with the third device in the distributed domain. In fig. 4 it has been assumed that all devices in the distributed domain indicate that the updating has been completed successfully. If the response from at least one of them indicated delay, the method could involve querying again the device in question of the result of the updating after some additional time. If the response from at least one device in the distributed domain indicated failure, the method could involve analysing the reason of the failure based on the actual value of the parameter in the response, possibly taking some corrective action like selecting an alternative binary file, and/or repeating the step of transferring the appropriate transmission packet(s) to said device, this time preferably as a dedicated, addressed transmission in order to avoid any possible confusion and unnecessary memory operations in those device that had already indicated success.

The querying and responding steps that implement the check of success of the updating may be performed in the form of intermediate sub-steps, and not (only) at the end of transmitting the whole software update as in fig. 4. An alternative embodiment of this kind will be described later in more detail.

Assuming that, as shown in fig. 4, the method comprised an initiating step 401 of commanding the devices in the distributed domain into a particular operating mode for updating, it is advantageous to conclude the method with a step 416 of commanding the devices in the distributed domain into some other operating mode, like a normal operating mode for example. An alternative could be to abstain from sending such a concluding command and to rely on a timeout mechanism in the devices in the distributed domain that would return them into a normal operating mode after a predetermined time after actions belonging to the updating mode have ceased. If the updating of memory spaces took place without the use of any dedicated operating mode, step 416 is naturally not needed unless some advantage could be gained by just informing the devices in the distributed domain that no more software updates are currently to be expected.

The practice of proactively storing identifiers of possible future software updates to the memory maps of devices, even before the actual software updates even exist, makes it possible to implement any or both of the two methods illustrated in figs. 6 and 7. The method of fig. 6 is meant to be performed as a programmed process in a device belonging to the central domain of a house automation system. Step 601 involves reading memory maps of such devices, for which software updates could be available. This can be done through individual interrogation, i.e. by consecutively sending dedicated, addressed inquiries to each device in turn and each time receiving the response of the device in question, so that the response includes the desired (portions of) memory maps from that device. If the communications protocol allows, step 601 could be done also by broadcasting a general inquiry, after which all devices respond without further prompting, preferably applying a collision avoidance and resolution protocol that ensures that each response gets through to the device or subsystem at the central domain in its turn.

Step 602 involves using the responses from the queried devices to compose a list of the identifiers of software updates that one or more devices in the house automation system would accept. This can be done by collecting the identifiers from the responses received from the devices without still having to know, whether any such software updates are actually available. Simply composing a list of all "acceptable" software updates may involve removing multiple occurrences of same identifiers, so that the resulting list is as compact as possible, but for future needs it may be advantageous to additionally store, at the device or subsystem at the central domain, a full device-specific list of which device would accept which update. This will help the device or subsystem at the central domain to target the appropriate devices correctly once the actual transmissions begin.

Step 603 involves searching for available updates, i.e. software updates the identifier(s) of which match at least one of the identifiers on the list composed earlier in step 602. The device or subsystem at the central domain may perform such searching automatically, for example by using a search robot that periodically crawls through known websites on which software updates are published. The search at step 603 may also involve some user interaction, for example so that a user commands the device or subsystem at the central domain to begin the search, and/or gives the URLs or corresponding identifiers of sources in which the search should be performed. Yet another possibility is that the user couples the device or subsystem at the central domain to a memory medium, on which available updates have been stored. In fig. 6 it is assumed that the search at step 603 results in at least one hit, so that at least one such software update is located that would be accepted by at least one device in the distributed domain.

Step 604 is optional and involves making a suggestion to a user that the found software update(s) could be installed. If and when the user gives his or her permission, the method proceeds to step 605, which involves downloading the XML document(s) containing the available update(s), extracting the binary file(s) that contain the actual software update(s), and performing the packetizing and transmitting for example in accordance with fig. 4 above. The step of downloading the XML document(s) may have been performed already at step 603, in particular if the XML documents contain user-readable information that could help the user to make the decision at step 604.

The method of fig. 6 could be characterized as proactive from the viewpoint of the house automation system, because it tends - at least if performed frequently enough - to maintain an accurate up-to-date list of what software updates the system could benefit from, and to acquire and install them as soon as they become available. Fig. 7 illustrates another method, which has a more reactive nature, because it depends more on the readiness of providers of software updates to send their most recent produce to the device or subsystem at the central domain.

The method of fig. 7 is meant to be performed as a programmed process in a device belonging to the central domain of a house automation system. Step 701 involves receiving at least one software update that an administrator of the house automation system or some other authorized party desires to use to update at least some of the distributed domain devices of the house automation system. One or more identifiers, such as GTIN's, are also received that correspond unambiguously to the received software update(s). Step 701 may involve for example receiving an XML document that includes both a binary file and the corresponding identifier information. Step 701 may also involve searching, either spontaneously or as a response to a command from a user, for recently published updates for house automation systems from distant sources such as websites or from local sources such as a memory medium. Such searching may differ from the searching step 603 of fig. 6 in that since the central domain device or subsystem may not have information of the identifiers stored in the distributed domain devices (or at least it is not certain that the information it has is accurate, or completely up-to-date), it may search for available updates in general, without necessarily knowing yet, whether the updates it may find are applicable to any of the devices in the house automation system.

Step 702 involves interrogating at least one device in the distributed domain of contents of a memory map maintained by said device. This can be accomplished by sending a corresponding query and receiving an appropriate response, like for example in steps 402 and 403 of the method of fig. 4.

Step 703 involves checking, which (if any) of the software updates received at step 701 are acceptable; in other words, which of the software updates have identifier(s) that match at least one identifier that was received from those devices that were interrogated of the contents of their memory maps at step 702. Step 703 may also involve composing a list that shows, which device(s) can be updated with which software update(s). Such a list or some information describing its information contents can be presented to a user at step 704, so that the user may choose, whether he or she wishes to implement the possible updating. The actual updating is performed at step 705, either after the user has made his or her selections at step 704 or automatically after the above-mentioned list has been completed at step 703.

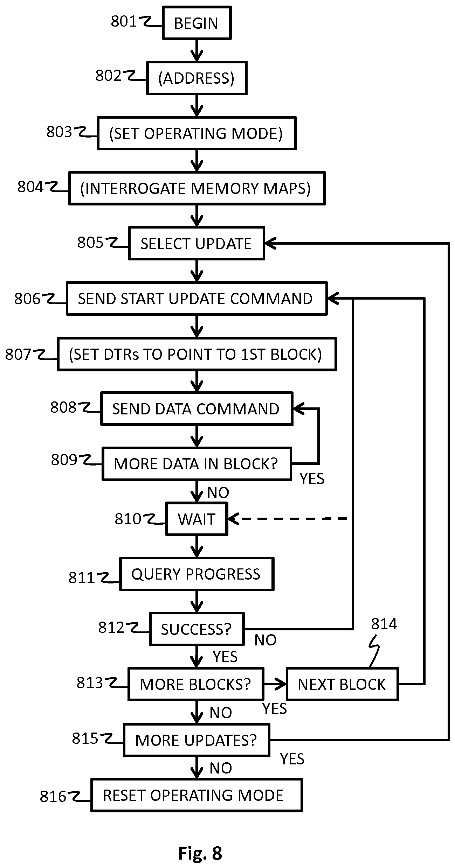

Fig. 8 illustrates a method to be executed at a device or subsystem in the central domain of a house automation system for the purposes of updating the contents of at least one memory space in at least one distributed domain device. After beginning at step 801, an addressing message can be transmitted if necessary, using e.g. the so-called "103 commands" of the DALI standard, to direct the following communications to the correct device(s). Step 803 corresponds to setting the device to which the software update is to be sent to the appropriate operating mode for programming; like step 802 this is also an optional step and only needed if the receiving and storing of software updates has been stipulated to take place in the framework of a particular operating mode.

Step 804 corresponds to interrogating the device(s) in the distributed domain of contents of at least one memory map maintained by such device(s). As was explained above the interrogation step may have been performed also earlier. Step 805 corresponds to selecting the intended updated contents of a memory space based on the contents of the memory map(s) the device(s) sent in response to said interrogating. The selection step may comprise for example extracting the appropriate binary file(s) from a markup language document.

In fig. 8 it is assumed that the concept of "software update" is equal to the concept "intended updated contents of a memory space"; in other words, this is the amount of data that will be referred to with one identifier, such as a ("virtual") GTIN. This amount of data can be divided into smaller amounts called blocks, with the size of a block having been selected so that, taken the memory management routines of a typical distributed domain device and its (typically relatively limited) amount of available RAM, it is sensible to receive and write into non-volatile memory one block at a time. Each block can further be considered to consist of bytes, each byte having e.g. 8 bits. Comparing to fig. 5 earlier, a software update is meant to concern one of the five horizontal rectangles. The transmission protocol may define one or more data commands, which represent the smallest units of transmission. There may be for example two data commands, one for transmitting one byte and another for transmitting two bytes.

With the concepts of software update, block, and data command defined as above, sending one complete software update means going through steps 805 - 814, including the necessary repetitions of one or more steps as follows. After a software update was selected for transmission at step 805, a "start update" command is sent at step 806. Assuming the three-byte commend format known from DALI, an exemplary "start update" command may comprise e.g. the code 0xE1 or some other appropriate characterizing code as an Address byte, the address of the device(s) to be updated in the Instance byte, and a code of the memory space to be updated as the Opcode byte. If the current transmission instance means resuming a previously interrupted transmission, in which only a part of the blocks of the software update were successfully transmitted, the method may comprise setting the DTRs to point to the first block to be written, as shown in step 807.

A first data command is sent at step 808, and the loop consisting of steps 808 and 809 is circulated until all bytes in the current block have been transmitted. If there are two or more data commands available that can carry different numbers of data, like the two data commands "send one byte" and "send two bytes", it may be most efficient to use the data command with larger transmission capacity (here: the data command "send two bytes") as much as possible, and only use the other data command for the last remaining byte if the block contained an uneven number of bytes.

Step 810 corresponds to waiting for a while in order to give the devices in the distributed domain time to store the received bytes in memory. The length of the waiting period may be selected based on knowledge about the processing capacity of typical distributed domain devices and it may be longer after the first block of a software update than after the subsequent blocks, because the distributed domain device(s) may need to reset a whole memory space before beginning to store updated data therein.

Step 811 corresponds to querying the device(s) in the distributed domain of the result of updating, i.e. the result of writing the most recently transmitted block into non-volatile memory. The response(s) is/are checked at step 812. If any of the addressed devices in the distributed domain reported failure, the transmission of the whole block is started anew from step 806. If all addressed devices reported success, the method continues to checking at step 813, whether there are still more blocks of the current software update to transmit. If yes, the next block is selected at step 814 and the block transmission routine begins anew from step 806.

If the distributed domain devices have also a third possible response that indicates that writing into non-volatile memory is still in progress, there may be a third alternative outcome from step 812 into the waiting step 810, after which a new query is sent to the device(s) that sent such a response. The third alternative outcome is shown in fig. 8 with a dashed arrow.

When the check for remaining blocks at step 813 gives a negative result, the method proceeds to step 815, at which it is checked whether another software update should be transmitted. If yes, a return to step 805 occurs for selecting the next software update, and the process of transmitting it block by block (and transmitting each block command by command) is repeated. A negative finding at step 815 shows that the updating process is completed for the time being, after which the distributed domain device(s) may be reset to a normal operating mode at step 816.

The step of actually updating a piece of program memory in the device to be updated, referred to with reference designators 110 and 111 in figs. 1-3, may benefit from certain particular details of implementation. One of such details is the so-called Virtual E2 approach, which allows the programmer to treat flash memory as if it were EEPROM. Basics of Virtual E2 are explained for example in the reference document "AN-1153 COP8™ Flash ISP HANDBOOK - Virtual E2 Guide"; Application Report, SNOA084B-May 2004-Revised May 2004, Texas Instruments Incorporated. According to an advantageous embodiment, interrupt service routines (ISRs) and interrupt vectors are copied to RAM (Random Access Memory) at start-up. Thus the ISRs may operate normally during flash writing, with only the main application being blocked; for example, reception of DALI commands and messages is possible while writing to the flash memory. A prerequisite may be that a number of first bytes, like the first 192 bytes, of RAM are excluded from applications use.

Concerning the concepts of normal operating mode and dedicated operating mode for programming, a difference should be drawn between operating modes of the distributed domain devices and operating modes of the bus that links the devices together. The solution and practices explained in this document are applicable irrespective of whether the bus or the distributed domain devices are in a normal operating mode or a dedicated operating mode. For the purposes of ensured success in updating and avoidance of inadvertent, uncontrollable situations it is advantageous (although not mandatory) to place a distributed domain device into a dedicated operating mode for the duration of software updating, with such dedicated operating mode temporarily restricting or inhibiting normal operation such as controlling the lighting intensity or colour. The bus may be operating normally during the software updating operation, meaning that all other communications on the bus take place normally and the transmissions related to software updating are only multiplexed with the other communications. Alternatively the device or subsystem at the central domain may reserve the whole bus for solely communications related to software updating. Such a choice may be advantageous to ensure that the software updating operation takes place as quickly and effectively as possible, and may be suitable particularly in cases where a significant portion of the distributed devices are all to be updated. Since reserving the whole bus for communications related to software updating prevents simultaneous transmissions that would relate to normal operation of the system, it may be advantageous to do it during times of little or no normal operation, like night time in the lighting system of a building that is only used during working hours.

It may be advantageous to maintain the updateable memory in pages or other kinds of discrete units, and to always have a copy of an old page available while writing a corresponding new page. This way if power is lost during the memory writing process, and the writing of the updated page was not completed, the old page is still intact and can be used at the next start-up after power has been restored. Each page, or memory unit of some other size, advantageously has a number of bytes (like the last 4 bytes) dedicated to a CRC that allows checking the integrity of the page. A failing CRC reveals e.g. a page the updating of which was in progress and not completed at the moment of losing power. Many modern microcontrollers include a built-in CRC generator that can be used both for the integrity checking of stored memory pages and for the integrity checking of packets or other units of data received over the control connection to be used in updating the software.

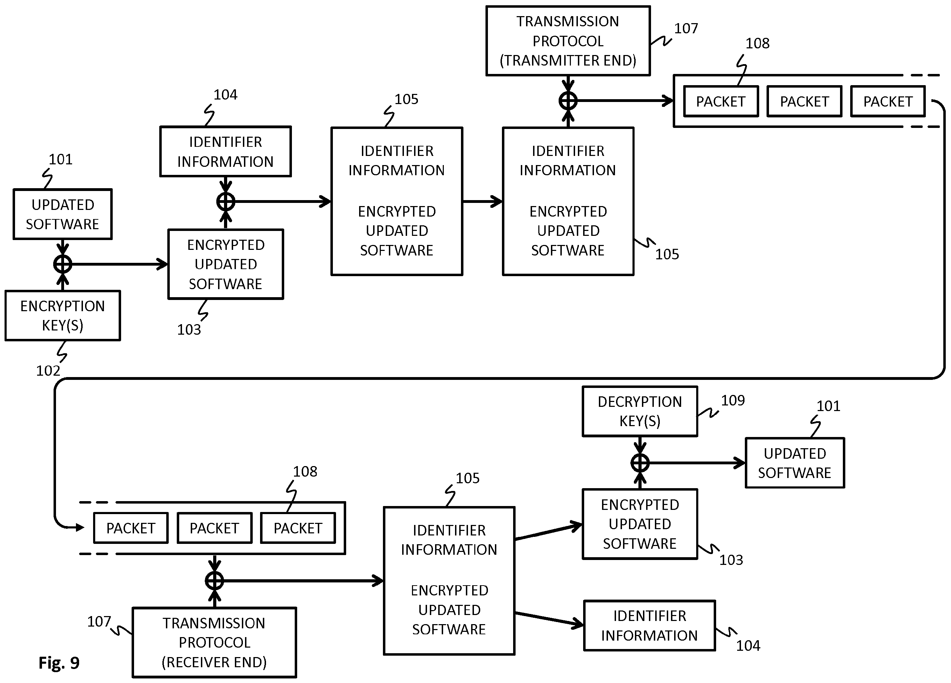

Fig. 9 illustrates a slightly modified method, in which the main difference to the method shown in figs. 1 to 3 is that the separation of the XML document into the encrypted updated software 103 and the identifier information 104 is performed at the device to be updated and not in the central domain. This embodiment has the advantage that the document that was distributed through public channels does not need to be analysed in the central domain, and lists of the acceptable updates does not need to be composed in the central domain, because the devices in the distributed domain may independently pick from the document those binary files that are suitable for them. After said separation the receiving device has both the encrypted updated software 103 and the identifier information 104 at its disposal. The method may comprise writing said identifier information 104 into such memory location of the receiving device, the contents of which are available for later interrogation by devices within the central domain. This way a device within the central domain may in any case investigate, what updated software (and what versions) are at the disposal of the devices in the distributed domain, and what updates are yet to be sent.

## Claims

1. A method for updating software in a memory space in a device belonging to the distributed domain of a house automation system, comprising:
- forming a binary file of encrypted, intended updated contents of said memory space,
- using a publicly available protocol to packetize (409) said binary file into one or more transmission packets,
- transferring (409) said one or more transmission packets to said device through a control connection of said house automation system,
- reconstructing said binary file at said device, and
- writing the contents of said binary file into said memory space; **characterised by** prior to transferring said one or more transmission packets to said device the method comprises using the control connection of said house automation system to interrogate (402,403) said device of contents of a memory map maintained by said device, and selecting (408) the intended updated contents of said memory space based on the contents of the memory map the device sent in response to said interrogating.

2. A method according to claim 1, wherein:
- the step of reconstructing said binary file at said device comprises decrypting the binary file, and
- the step of writing the contents of said binary file into said memory space involves writing said contents into said memory space in decrypted form.

3. A method according to claim 1, wherein:
- the step of writing the contents of said binary file into said memory space involves writing said contents into said memory space in encrypted form, and
- the method comprises decrypting the encrypted contents of said memory space at a later instant of time.

4. A method according to any of the preceding claims, wherein:
- after forming said binary file, said binary file is inserted in one or more parts into a document composed in a markup language, and
- before the step of using a publicly available protocol to packetize said binary file into one or more transmission packets, the method comprises separating said binary file from other contents of said document.

5. A method according to claim 4, wherein the method comprises:
- inserting an identifier of said intended updated contents of said memory space into said document.

6. A method according to claim 5, wherein said identifier is a GTIN code that identifies a party responsible for the contents of said binary file in addition to identifying said intended updated contents of said memory space.

7. A method according to any of claims 4 to 6, wherein said document is an XML document.

8. A method according to any of the preceding claims, comprising:
- after said transferring of said one or more transmission packets to said device, querying the device of a result of updating said memory space, and
- sending from said device a response to such querying, said response indicating one of: having completed the updating successfully, still having the updating in progress, or having failed the updating.

9. A method according to claim 8, wherein:
- the step of transferring said one or more transmission packets to said device involves broadcasting said one or more transmission packets to two or more devices in the distributed domain simultaneously, and
- the step of querying the device of a result of updating said memory space involves querying such two or more devices individually.

10. A method according to any of the preceding claims, comprising:
- prior to transferring said one or more transmission packets to said device, commanding said device to enter a particular operating mode used for updating the contents of memory spaces.

11. A method for transmitting a software update from a device or subsystem at the central domain of a house automation system to one or more devices in the distributed domain of said house automation system, comprising:
- interrogating, through a control connection of said house automation system, at least one of said devices in the distributed domain of contents of a memory map maintained by said device,
- selecting the software update to be transmitted based on the contents of the memory map the at least one device sent in response to said interrogating,
- using a publicly available protocol to packetize a binary file that includes said software update into one or more transmission packets, and
- transmitting said one or more transmission packets towards said at least one of said devices in the distributed domain through said control connection of said house automation system.

12. A method for receiving, at a device in the distributed domain of a house automation system, a software update from a device or subsystem at the central domain of said house automation system, comprising:
- responding to an interrogation coming through a control connection of said house automation system from said device or subsystem at the central domain by transmitting contents of a memory map maintained by said device in the distributed domain,
- using a publicly available protocol to receive, through said control connection of said house automation system, a packetized binary file that includes said software update which was selected based on said transmitted content of a memory map,
- reconstructing said binary file at said device in the distributed domain, and
- writing the contents of said binary file into a memory space identified by at least some of said contents of said memory map.

## Patentansprüche

1. Verfahren zum Aktualisieren von Software in einem Speicherraum in einer Vorrichtung, die dem verteilten Bereich eines Hausautomatisierungssystems angehört, das Folgendes umfasst:
- Bilden einer Binärdatei verschlüsselter vorgesehener aktualisierter Inhalte des Speicherraums,
- Verwenden eines öffentlich verfügbaren Protokolls, um die Binärdatei in ein oder mehrere Übertragungspakete zu verpacken (409),
- Übertragen (409) des einen oder der mehreren Übertragungspakete zur Vorrichtung über eine Steuerverbindung des Hausautomatisierungssystems,
- Rekonstruieren der Binärdatei in der Vorrichtung und
- Schreiben der Inhalte der Binärdatei in den Speicherraum; wobei
das Verfahren **gekennzeichnet ist durch** Verwenden der Steuerverbindung des Hausautomatisierungssystems vor dem Übertragen des einen oder der mehreren Übertragungspakete zur Vorrichtung, um die Vorrichtung hinsichtlich Inhalten einer Speicherkarte, die durch die Vorrichtung geführt wird, abzufragen (402, 403) und die beabsichtigten aktualisierten Inhalte des Speicherraums auf der Grundlage der Inhalte der Speicherkarte, die die Vorrichtung als Antwort auf das Abfragen gesendet hat, zu wählen (408).

2. Verfahren nach Anspruch 1, wobei
- der Schritt des Rekonstruierens der Binärdatei bei der Vorrichtung ein Entschlüsseln der Binärdatei umfasst und
- der Schritt des Schreibens der Inhalte der Binärdatei in den Speicherraum ein Schreiben der Inhalte in den Speicherraum in entschlüsselter Form umfasst.

3. Verfahren nach Anspruch 1, wobei
- der Schritt des Schreibens der Inhalte der Binärdatei in den Speicherraum ein Schreiben der Inhalte in den Speicherraum in verschlüsselter Form umfasst und
- das Verfahren ein Entschlüsseln der verschlüsselten Inhalte des Speicherraums zu einem späteren Zeitpunkt umfasst.

4. Verfahren nach einem der vorhergehenden Ansprüche, wobei
- die Binärdatei nach dem Bilden der Binärdatei in einem oder mehreren Teilen in ein Dokument eingesetzt wird, das in einer Auszeichnungssprache aufgebaut ist, und
- das Verfahren vor dem Schritt des Verwendens eines öffentlich verfügbaren Protokolls, um die Binärdatei in ein oder mehrere Übertragungspakete zu verpacken, ein Trennen der Binärdatei von weiteren Inhalten des Dokuments umfasst.

5. Verfahren nach Anspruch 4, wobei das Verfahren Folgendes umfasst:
- Einsetzen einer Kennung der vorgesehenen aktualisierten Inhalte des Speicherraums in das Dokument.

6. Verfahren nach Anspruch 5, wobei die Kennung ein GTIN-Code ist, der zusätzlich zum Identifizieren der vorgesehenen aktualisierten Inhalte des Speicherraums eine Partei identifiziert, die für die Inhalte der Binärdatei verantwortlich ist.

7. Verfahren nach einem der Ansprüche 4 bis 6, wobei das Dokument ein XML-Dokument ist.

8. Verfahren nach einem der vorhergehenden Ansprüche, das Folgendes umfasst:
- Abfragen der Vorrichtung nach dem Übertragen des einen oder der mehreren Übertragungspakete zur Vorrichtung hinsichtlich eines Ergebnisses des Aktualisierens des Speicherraums und
- Senden von der Vorrichtung einer Antwort auf ein derartiges Abfragen, wobei die Antwort Folgendes anzeigt: das Aktualisieren wurde erfolgreich abgeschlossen oder das Aktualisieren ist immer noch in Arbeit oder das Aktualisieren ist fehlgeschlagen.

9. Verfahren nach Anspruch 8, wobei
- der Schritt des Übertragens des einen oder der mehreren Übertragungspakete zur Vorrichtung ein gleichzeitiges Senden des einen oder der mehreren Übertragungspakete zu zwei oder mehr Vorrichtung im verteilten Bereich umfasst und
- der Schritt des Abfragens der Vorrichtung hinsichtlich eines Ergebnisses des Aktualisierens des Speicherraums ein einzelnes Abfragen derartiger zwei oder mehr Vorrichtungen umfasst.

10. Verfahren nach einem der vorhergehenden Ansprüche, das Folgendes umfasst:
- Anweisen der Vorrichtung vor dem Übertragen des einen oder der mehreren Übertragungspakete zur Vorrichtung, in einen bestimmten Betriebsmodus einzutreten, der zum Aktualisieren der Inhalte von Speicherräumen verwendet wird.

11. Verfahren zum Übertragen einer Software-Aktualisierung von einer Vorrichtung oder einem Untersystem im zentralen Bereich eines Hausautomatisierungssystems zu einer oder mehreren Vorrichtungen im verteilten Bereich des Hausautomatisierungssystems, das Folgendes umfasst:
- Abfragen über eine Steuerverbindung des Hausautomatisierungssystems mindestens einer der Vorrichtungen im verteilten Bereich hinsichtlich Inhalten einer Speicherkarte, die durch die Vorrichtung geführt wird,
- Wählen der Software-Aktualisierung, die übertragen werden soll, auf der Grundlage der Inhalte der Speicherkarte, die die mindestens eine Vorrichtung in Antwort auf das Abfragen gesendet hat,
- Verwenden eines öffentlich verfügbaren Protokolls, um eine Binärdatei, die die Software-Aktualisierung enthält, in ein oder mehrere Übertragungspakete zu verpacken, und
- Übertragen des einen oder der mehreren Übertragungspakete zur mindestens einen Vorrichtung im verteilten Bereich über die Steuerverbindung des Hausautomatisierungssystems.

12. Verfahren zum Empfangen bei einer Vorrichtung im verteilten Bereich eines Hausautomatisierungssystems einer Software-Aktualisierung von einer Vorrichtung oder einem Untersystem im zentralen Bereich des Hausautomatisierungssystems, das Folgendes umfasst:
- Antworten auf ein Abfragen, das über eine Steuerverbindung des Hausautomatisierungssystems von der Vorrichtung oder vom Untersystem im zentralen Bereich eintrifft, durch Senden von Inhalten einer Speicherkarte, die durch die Vorrichtung im verteilten Bereich geführt wird,
- Verwenden eines öffentlich verfügbaren Protokolls, um über die Steuerverbindung des Hausautomatisierungssystems eine verpackte Binärdatei zu empfangen, die die Software-Aktualisierung, die auf Grundlage des übertragenen Inhalts einer Speicherkarte gewählt wurde, enthält,
- Rekonstruieren der Binärdatei in der Vorrichtung im verteilten Bereich und
- Schreiben der Inhalte der Binärdatei in einen Speicherraum, der durch mindestens einige der Inhalte der Speicherkarte identifiziert wird.

## Revendications

1. Procédé d'actualisation de logiciel dans un espace de mémoire dans un dispositif appartenant au domaine distribué d'un système de domotique, comprenant :
- la formation d'un fichier binaire de contenus actualisés prévus cryptés dudit espace de mémoire,
- l'utilisation d'un protocole disponible publiquement pour paquétiser (409) ledit fichier binaire en un ou plusieurs paquets de transmission,
- le transfert (409) desdits u ou plusieurs paquets de transmission audit dispositif par le biais d'une connexion de commande dudit système de domotique,
- la reconstruction dudit fichier binaire au niveau dudit dispositif, et
- l'écriture des contenus dudit fichier binaire dans ledit espace de mémoire ;
**caractérisé en ce que** le procédé comprend, avant le transfert desdits un ou plusieurs paquets de transmission audit dispositif, l'utilisation de la connexion de commande dudit système de domotique pour interroger (402, 403) ledit dispositif de contenus d'une carte de mémoire tenue à jour par ledit dispositif, et la sélection (408) des contenus actualisés prévus dudit espace de mémoire sur la base des contenus de la carte de mémoire que le dispositif a envoyée en réponse à ladite interrogation.

2. Procédé selon la revendication 1, dans lequel :
- l'étape de reconstruction dudit fichier binaire au niveau dudit dispositif comprend le décryptage du fichier binaire, et
- l'étape d'écriture des contenus dudit fichier binaire dans ledit espace de mémoire implique l'écriture desdits contenus dans ledit espace de mémoire sous forme décryptée.

3. Procédé selon la revendication 1, dans lequel :
- l'étape d'écriture des contenus dudit fichier binaire dans ledit espace mémoire implique l'écriture desdits contenus dans ledit espace mémoire sous forme cryptée, et
- le procédé comprend le décryptage des contenus cryptés dudit espace mémoire à un instant ultérieur.

4. Procédé selon l'une quelconque des revendications précédentes, dans lequel :
- après la formation dudit fichier binaire, ledit fichier binaire est inséré dans une ou plusieurs parties d'un document composé dans un langage de balisage, et
- avant l'étape d'utilisation d'un protocole disponible publiquement pour paquétiser ledit fichier binaire en un ou plusieurs paquets de transmission, le procédé comprend la séparation dudit fichier binaire d'autres contenus dudit document.

5. Procédé selon la revendication 4, le procédé comprenant :
- l'insertion d'un identifiant desdits contenus actualisés prévus dudit espace mémoire dans ledit document.

6. Procédé selon la revendication 5, dans lequel ledit identifiant est un code GTIN qui identifie une partie responsable des contenus dudit fichier binaire en plus d'identifier lesdits contenus actualisés prévus dudit espace mémoire.

7. Procédé selon l'une quelconque des revendications 4 à 6, dans lequel ledit document est un document XML.

8. Procédé selon l'une quelconque des revendications précédentes, comprenant :
- après ledit transfert desdits un ou plusieurs paquets de transmission audit dispositif, l'interrogation du dispositif pour obtenir un résultat d'actualisation dudit espace de mémoire, et
- l'envoi par ledit dispositif d'une réponse à cette interrogation, ladite réponse indiquant l'un des résultats suivants : actualisation réalisée avec succès, actualisation toujours en cours, ou échec d'actualisation.

9. Procédé selon la revendication 8, dans lequel :
- l'étape de transfert desdits un ou plusieurs paquets de transmission audit dispositif implique la diffusion desdits un ou plusieurs paquets de transmission à deux ou plusieurs dispositifs dans le domaine distribué simultanément, et
- l'étape d'interrogation du dispositif pour obtenir un résultat d'actualisation dudit espace mémoire implique l'interrogation de deux ou plusieurs tels dispositifs individuellement.

10. Procédé selon l'une quelconque des revendications précédentes, comprenant :
- avant le transfert desdits un ou plusieurs paquets de transmission audit dispositif, la commande audit dispositif de passer sur un mode de fonctionnement particulier utilisé pour actualiser les contenus des espaces mémoires.

11. Procédé de transmission d'une actualisation de logiciel d'un dispositif ou sous-système au niveau du domaine central d'un système de domotique à un ou plusieurs dispositifs dans le domaine distribué dudit système de domotique, comprenant :
- l'interrogation, par le biais d'une connexion de commande dudit système de domotique, d'au moins un desdits dispositifs dans le domaine distribué de contenus d'une carte mémoire tenue à jour par ledit dispositif,
- la sélection de l'actualisation logicielle à transmettre sur la base des contenus de la carte de mémoire que l'au moins un dispositif a envoyée en réponse à ladite interrogation,
- l'utilisation d'un protocole disponible publiquement pour paquétiser un fichier binaire qui comporte ladite actualisation logicielle en un ou plusieurs paquets de transmission, et
- la transmission desdits un ou plusieurs paquets de transmission vers ledit au moins un desdits dispositifs dans le domaine distribué par le biais de ladite connexion de commande dudit système de domotique.

12. Procédé de réception, au niveau d'un dispositif dans le domaine distribué d'un système de domotique, d'une actualisation de logiciel depuis un dispositif ou sous-système au niveau du domaine central dudit système de domotique, comprenant :
- la réponse à une interrogation provenant par le biais d'une connexion de commande dudit système de domotique depuis ledit dispositif ou sous-système au niveau du domaine central en transmettant des contenus d'une carte de mémoire tenue à jour par ledit dispositif dans le domaine distribué,
- l'utilisation d'un protocole disponible publiquement pour recevoir, par le biais de ladite connexion de commande dudit système de domotique, un fichier binaire paquétisé qui comporte ladite actualisation de logiciel qui a été sélectionnée sur la base dudit contenu transmis d'une carte de mémoire,
- la reconstruction dudit fichier binaire au niveau dudit dispositif dans le domaine distribué, et
- l'écriture des contenus dudit fichier binaire dans un espace de mémoire identifié par au moins certains desdits contenus de ladite carte de mémoire.
